# EUROPEAN PATENT SPECIFICATION

(11) **EP 1 845 430 B1**
(45) Date of publication and mention of the grant of the patent: **17.01.2018**
(21) Application number: 07388019.7
(22) Date of filing: 30.03.2007
(51) Int. Cl.: G05D 16/06

(54) **Pressure reducing valve**
Druckminderungsventil
Vanne de réduction de pression

(30) Priority: 06.04.2006 NO 20061572; 09.11.2006 NO 20065154
(43) Date of publication of application: 17.10.2007
(73) Proprietor: Frølich Braathen, Thor, 3359 Eggedal (NO)
(72) Inventor: Frølich Braathen, Thor, 3359 Eggedal (NO)
(74) Representative: Protector IP Consultants AS

(56) References cited:
- WO-A1-2005/078359
- DE-A1- 3 616 828
- GB-A- 1 471 358
- US-A- 5 427 132

## Description

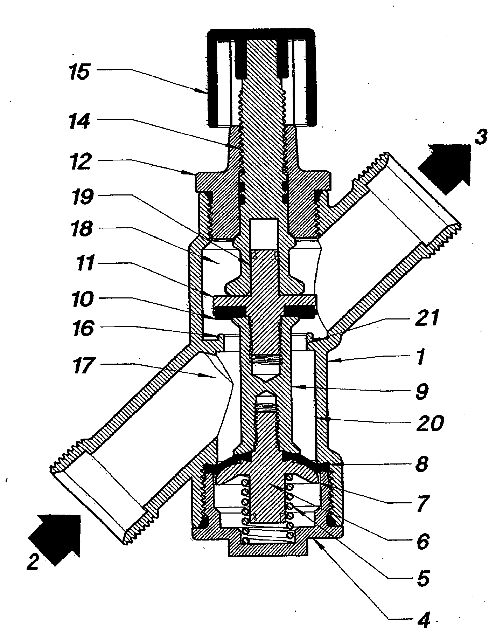

The present invention relates to a pressure-reducing valve for reducing water pressure in homes. More specifically, the invention provides a pressure-reducing valve and a combination valve as respectively disclosed in claims 1 and 6.
Today, there are in principle two types of pressure reducing valves, non-adjustable valves (pre-set from the factory) and valves that are adjustable by operating a hand wheel or a screw on the valve. In both cases, it is the adjustment of the spring pressure in the valve that gives a fixed pressure on the low-pressure side of the valve. According to the regulations relating to the water distribution system, all incoming pressure in homes that exceeds 5 bar should be regulated down to 2 - 4 bar, usually 3 bar. This is done by using a pressure-reducing valve between the incoming pressure (the high-pressure side) and the outgoing pressure (the low-pressure side).
Pressure reducing valves according to the prior art are designed so that the valve spring, via its attached diaphragm, is actuated by the pressure acting on the low-pressure side of the valve. Thus, a large and powerful spring must be used together with a diaphragm having a large area in order to reduce incoming high pressure. This results in a large valve, which is both costly and space consuming. With a valve of this type, low pressure and high pressure must be separated from each another, usually by means of a movable shaft with O-rings, which gradually become worn and cause leakages. Another disadvantage is that when there is low pressure on the high-pressure side - under set low pressure - the valve causes large pressure losses, with the result that less water enters through the valve.
In GB 1 471 358 there is provided a pressure regulator according to the preamble of claim 1.
According to the present invention, an attempt is made to solve the aforementioned and other problems by means of a pressure-reducing valve and a combination valve as respectively disclosed in claims 1 and 6.
Advantageous embodiments of the invention are set forth in the dependent claims.
The invention is described in more detail below, with reference to the attached drawing which shows a sectional side view of a preferred embodiment of the invention.
The drawing shows a pressure-reducing valve comprising a housing 1 having an inlet indicated by the arrow marked 2 for incoming water, normally under high pressure, and an outlet indicated by the arrow marked 3 for outgoing water, normally under lower pressure than the incoming water, but with certain exceptions as will be explained in more detail below.
Water flows into the valve through the inlet 2, then enters a chamber 17, and next flows through an opening defined by a seat 16, a stem 9 and a gasket 10 in order to then enter a chamber 18 after which it flows out through the outlet 3. The normal high-pressure side and low-pressure side of the valve are thus separated by an opening 21 between the chamber 17 and the chamber 18, the inlet 2 and the chamber 17 thus forming the high-pressure side of the valve whilst the chamber 18 and the outlet 3 form the low-pressure side of the valve.

As shown in the drawing, the housing 1 is advantageously arranged with a first axis (inlet/outlet axis) running through the centre of the inlet 2 and the outlet 3 at an oblique angle relative to a second axis (guiding axis) running through the centre of the stem 9 and a stem 14, and thus also at an oblique angle relative to the plane of the seat 16. This permits an extremely compact valve structure with low-pressure loss through the valve.

Along the second axis, an end piece 12 is sealingly screwed into one end of the housing, in which end piece 12 there is in turn sealingly screwed a stop tap stem 14 with the aid of O-ring gaskets arranged in two circumferential grooves on the stem 14 (for a more detailed description of the fastening and sealing of the stop tap stem 14, reference is made to the Applicant's International Application No. PCT/N02005/000046). At a first end of the stem 14, an operating hand wheel 15 is provided for the stop tap function, and, at a second end of the stem, a hole 19 is centrically arranged about the second axis for slidingly guiding a correspondingly shaped part of a gasket holder 11, on linear movement in the hole, along the second axis. The gasket 10 extends along the circumference of the gasket holder 11, and can be brought into contact with the seat 16 for closing the opening 21 between the two chambers 17 and 18. Along the second axis, the gasket holder 11, furthermore, is screwed onto one end of the stem 9, and screwed onto the other end of the stem 9 is a guide and supporting member 6 with a diaphragm 8 having a centrically arranged opening fixed in the junction between the stem 9 and the guide and supporting member 6. The guide and supporting member 6 is configured with a wing portion 7 for supporting contact with a lower surface of the diaphragm 8 and for linear guiding of the guide and supporting member 6 and other parts attached thereto along the second axis in that the periphery of the wing portion 7 is in sliding contact with an inner cylindrical surface of a spring housing 4 sealingly screwed into an opposite end of the housing 1 in relation to the end piece 12. A spiral spring 5 is disposed between the guide and supporting member 6 and the spring housing 4, and a first end of the spring 5 is in contact with a seat centrically arranged in the spring housing 4 whilst an opposite, second end of the spring 5 is held in place by a cylindrical projecting part of the guide and supporting member 6 arranged centrically about the second axis. As also can be seen from the drawing, the peripheral outer end of the diaphragm 8 is fixed between the housing 1 and the spring holder 4.

Thus, two assemblies of different parts are provided along the second shaft, of which the assembly comprising the stem 14 provides the valve's stop tap function whilst the other assembly comprising the stem 9 provides the valve's pressure reducing function, and which assemblies can move linearly relative to each other along the second axis.

A precise linear movement of the stem 9 is ensured due to the aforementioned slideways, and this in turn ensures a correct contact between the gasket 10 and the seat 16. This is extremely important since the pressure reducing function at normal pressure will open and close the valve each time water is drawn in the home, and since incorrect contact will result in rapid and unnecessary wear of the gasket 10. Furthermore, the design of the diaphragm supporting wing portion 7 of the guide and supporting member 6 will ensure that the diaphragm 8 is relieved of pressure, thereby preventing tears therein and further assuring the reliability and service life of the valve.

On normal use of the valve, the stem 14 for the stop tap will be in the rear position shown in the drawing. The assembly comprising the guide and supporting member 6, the stem 9 and the gasket holder 11 can then move with a free stroke between an open position, as shown in the drawing, and a closed position in which the gasket 10 bears against the seat 16, which stroke in one direction is limited by contact between the gasket holder 11 and said second end of the stem 14 and in an opposite second direction is limited by sealing contact between the gasket 14 and the seat 16.

When there is a need to close the valve using the valve's stop tap function, the stop tap stem 14 is screwed in using the hand wheel 15 until the gasket 10 on the gasket holder 11 has been brought into sealing contact with the seat 16 against the force of the spring 5. As indicated above, the preferred embodiment of the valve described here thus provides a combined stop tap and pressure-reducing valve, where the stop tap function thus overrides the pressure reducing function.

The valve's pressure reducing function can be described by means of the following examples, when the spring pressure is set to give 3 bar on the low-pressure side of the valve:
1. A water tap in the home is closed:
   On the low-pressure side comprising the chamber 18 and the outlet 3, pressure builds up to 3 bar and presses the gasket holder 11 and its gasket 10 against the seat 16. At the same time, a higher pressure builds up on the high-pressure side comprising the inlet 2 and the chamber 17 so that the diaphragm 8 is subjected to a higher pressure and the spring 5 is thus compressed. The valve will thus be closed in that the gasket 10 seals against the seat 16, and the low-pressure side will be at its pressure of 3 bar out to the water tap in the home, whilst the high-pressure side will be under the pressure prevailing in the water distribution system, typically from 3 - 16 bar.
2. A water tap in the home is opened:
   The low-pressure side loses its pressure of 3 bar and this gives less pressure against the gasket holder 11. The high-pressure side loses pressure, and hence pressure against the diaphragm 8. The spring 5 is thus subject to a smaller load and, via the stem 9 and the gasket holder 11, presses the gasket 10 away from the seat 16. The valve thus opens and provides water in the open tap at a pressure of slightly less than 3 bar, due to the pressure loss between the valve and the tap. The low-pressure side gives almost constant pressure, although the pressure on the high-pressure side may vary from 3 - 16 bar. The reason for this is that the higher the pressure in the inlet 2, the greater the pressure against the diaphragm 8 and the spring 5, and as a result the opening between the gasket 10 and the seat 16 is choked to an increasing degree at increasing pressure.
3. The high-pressure side has a (low) pressure of 1 - 3 bar:
   At a pressure on the high-pressure side of 1 - 3 bar, the pressure against the diaphragm 8 is too small to allow the spring 5 to be compressed, the spring 5 being set to first be compressed at a pressure of more than 3 bar. The valve will then be held constantly open, as shown in the drawing, when a tap in the home is both open and closed. This results in minimum pressure loss at low incoming pressures to the home through the valve inlet 2.

To reduce the dimensions of the valve by using the smallest possible spring 5, the Applicant has found that this can be done by using a given ratio between the inner diameter of the chamber 17, indicated by 20, and the diameter of the opening 21 between the chamber 17 and 18, so that a fixed pressure on the diaphragm 8 can be obtained.

To avoid furring, the stem 9, the stem 14, the end piece 12 and the gasket holder 11 are advantageously made of a plastic material. The housing 1 and the spring housing 4 are advantageously made of brass, whilst the gasket 10 and the diaphragm 8 are advantageously made of respectively suitable rubber or elastomeric materials.

Although the preferred embodiment of the invention described here is a combined stop tap and pressure reducing valve, it will be evident to the skilled person, in the light of the description, that the valve alternatively can be produced as a pure pressure reducing valve as the gasket holder 11 and gasket 10 can then be slidingly guided in a corresponding hole 19 arranged in the end piece 12 or in a fixed part of the housing 1 along said second axis.

## Claims

1. A pressure reducing valve for reducing water pressure in homes, comprising a valve housing (1) having a high-pressure side (2, 17) and a low-pressure side (3, 18), which high-pressure side (2, 17) and low-pressure side (3, 18) are separated by an opening (21) that can be closed against the force of a spring (5) actuated by the pressure in the valve, the spring (5) being actuated by the pressure acting on the high-pressure side (2, 17) of the valve, **characterised in that** it further comprises a stem (9) and a guide and supporting member (6) attached to said stem (9), said guide and supporting member (6) being configured with a wing portion (7) for supporting contact with a lower surface of a diaphragm (8) for pressure-actuation of the spring (5) and for linear guiding of the guide and supporting member (6) along a guiding axis, and that the periphery of the wing portion (7) is in sliding contact with an inner cylindrical surface of a spring housing (4).

2. A pressure reducing valve according to claim 1, **characterised in that** the housing (1) is arranged having an inlet/outlet axis running through the centre of an inlet (2) and an outlet (3) for the valve, at an oblique angle relative to the guiding axis, running through the centre of a first assembly comprising the stem (9) and a gasket holder (11) connected to the spring (5), for opening and closing the opening (21), and thus also at an oblique angle relative to the plane of a seat (16) surrounding the opening (21).

3. A pressure reducing valve according to claim 1 or 2, **characterised in that** the opening (21) is kept constantly open without movements in the valve by an incoming pressure in the valve that is below set outgoing pressure.

4. A pressure reducing valve according to claim 2 or 3, **characterised in that** a part of the gasket holder (11) is slidably arranged in a correspondingly shaped hole (19) centrically arranged about the guiding axis for linear movement of the gasket holder (11) in the hole (19) along said guiding axis.

5. A pressure reducing valve according to claim 4, **characterised in that** the hole (19) is arranged in an end piece (12) or in a fixed part of the housing (1) along said guiding axis.

6. A combination valve comprising a pressure reducing valve according to any one of the preceding claims, comprising a valve housing (1) having a high-pressure side (2, 17) and a low-pressure side (3, 18), which high-pressure side (2, 17) and low-pressure side (3, 18) are separated by an opening (21) that can be closed against the force of a spring (5) actuated by the pressure in the valve, the spring (5) being actuated by the pressure acting on the high-pressure side (2, 17) of the valve, and a stop tap, **characterised in that** the stop tap having a stem (14), which is linearly arranged along an axis; an assembly, which forms the valve's pressure reducing valve is arranged along the same axis; and that a hole (19) is arranged at an end of the stop tap stem (14), which stop tap stem (14), when the stop tap is closed, is screwed into a forward position so that a gasket holder's (11) gasket (10) is forced into sealing contact against a seat (16) against the force of the spring (5), for overriding the pressure reducing valve, and, when the stop tap is open, is screwed out to a rear position so that the gasket holder (11) can move with a free stroke along said axis controlled only by the actuation of the spring (5).

## Patentansprüche

1. Druckminderungsventil zur Minderung von Wasserdruck in Wohnhäusern, aufweisend ein Ventilgehäuse (1) mit einer Hochdruckseite (2, 17) und einer Niederdruckseite (3, 18), wobei die Hochdruckseite (2, 17) und die Niederdruckseite (3, 18) durch eine Öffnung (21) getrennt sind, die gegen die Kraft einer Feder (5) geschlossen werden kann, die durch den Druck in dem Ventil betätigt wird, wobei die Feder (5) durch den Druck betätigt wird, der auf die Hochdruckseite (2, 17) des Ventils wirkt, **dadurch gekennzeichnet, dass** es weiterhin einen Stamm (9) und ein mit dem Stamm (9) gekoppeltes Führungs- und Stützelement (6) aufweist, wobei das Führungs- und Stützelement (6) mit einem Flügelteil (7) für einen Stützkontakt mit einer Unterseite einer Membran (8) zur Druckbetätigung der Feder und zur linearen Führung des Führungs- und Stützelements entlang einer Führungsachse ausgestaltet ist, wobei der Umfang des Flügelteils (7) mit einer Zylinder-Innenfläche eines Federgehäuses (4) in Gleitkontakt ist.

2. Druckminderungsventil nach Anspruch 1, **dadurch gekennzeichnet, dass** das Gehäuse (1) mit einer Einlass-/Auslassachse ausgebildet ist, die durch den Mittelpunkt eines Einlasses (2) und eines Auslasses (3) für das Ventil in einem schiefen Winkel relativ zu der Führungsachse verläuft, die durch den Mittelpunkt einer ersten Anordnung verläuft, aufweisend den Stamm (9) und eine Dichtungshalterung (11), die mit der Feder (5) zum Öffnen und Schließen der Öffnung (21) verbunden ist, und somit auch in einem schiefen Winkel relativ zur Ebene eines Sitzes (16), der die Öffnung (21) umgibt, angeordnet ist.

3. Druckminderungsventil nach Anspruch 1 oder 2, **dadurch gekennzeichnet, dass** die Öffnung (21) ohne Bewegungen in dem Ventil durch einen Eingangsdruck des Ventils, der unterhalb des festgelegten Ausgangsdrucks liegt, konstant offen gehalten wird.

4. Druckminderungsventil nach Anspruch 2 oder 3, **dadurch gekennzeichnet, dass** ein Abschnitt der Dichtungshalterung (11) in einem entsprechend geformten Loch (19) verschiebbar angeordnet ist, das zentrisch um die Führungsachse zur linearen Bewegung der Dichtungshalterung (11) in dem Loch (19) entlang der Führungsachse angeordnet ist.

5. Druckminderungsventil nach Anspruch 4, **dadurch gekennzeichnet, dass** das Loch (19) in einem Endstück (12) oder in einem feststehenden Abschnitt des Gehäuses (1) entlang der Führungsachse angeordnet ist.

6. Kombinationsventil, umfassend ein Druckminderungsventil nach einem der vorangehenden Ansprüche,
umfassend ein Ventilgehäuse (1) mit einer Hochdruckseite (2, 17) und einer Niederdruckseite (3, 18), wobei die Hochdruckseite (2, 17) und Niederdruckseite (3, 18) durch eine Öffnung (21) getrennt sind, die gegen die Kraft einer Feder geschlossen werden kann, die durch den Druck in dem Ventil betätigt wird, wobei die Feder durch den Druck betätigt wird, der auf die Hochdruckseite (2, 17) des Ventils wirkt, und eine Stopptaste, **dadurch gekennzeichnet, dass** die Stopptaste einen Stamm (14) aufweist, der linear entlang einer Achse angeordnet ist; wobei eine Anordnung, die das Ventil-Druckminderungsventil ausbildet, entlang der gleichen Achse angeordnet ist; und dass ein Loch (19) an einem Ende des Stopptastenstamms (14) angeordnet ist, wobei der Stopptastenstamm (14), wenn die Stopptaste geschlossen ist, in eine Vorwärtsposition eingeschraubt ist, so dass eine Dichtungshalterung (11) der Dichtung (10) in Dichtkontakt gegen einen Sitz (16) entgegen der Kraft der Feder (5) zum Überwinden des Druckminderungsventils gepresst wird, und, wenn die Stopptaste geöffnet ist, in eine rückwärtige Position herausgeschraubt ist, so dass sich die Dichtungshalterung (11) mit einem freien Hub entlang der Achse bewegen kann, der nur durch die Betätigung der Feder (5) gesteuert wird.

## Revendications

1. Vanne de réduction de pression pour réduire la pression d'eau dans les maisons, comprenant un logement (1) de vanne ayant un côté haute-pression (2, 17) et un côté basse-pression (3, 18), lesquels côté haute-pression (2, 17) et côté basse-pression (3, 18) sont séparés par une ouverture (21) qui peut être fermée à l'encontre de la force d'un ressort (5) actionné par la pression dans la vanne, le ressort (5) étant actionné par la pression agissant sur le côté haute-pression (2, 17) de la vanne, **caractérisée en ce qu'**elle comprend en outre une tige (9) et un élément de guidage et de support (6) attaché à ladite tige (9), ledit élément de guidage et de support (6) étant configuré avec une partie aile (7) pour supporter le contact avec une surface inférieure d'un diaphragme (8) pour l'actionnement par pression du ressort (5) et pour le guidage linéaire de l'élément de guidage et de support (6) le long d'un axe de guidage, et que la périphérie de la partie aile (7) est en contact coulissant avec une surface cylindrique intérieure d'un logement (4) de ressort.

2. Vanne de réduction de pression selon la revendication 1, **caractérisée en ce que** le logement (1) est agencé ayant un axe d'entrée/sortie passant à travers le centre d'une entrée (2) et d'une sortie (3) pour la vanne, selon un angle oblique relatif à l'axe de guidage, passant à travers le centre d'un premier ensemble comprenant la tige (9) et un porte-joint (11) relié au ressort (5), pour ouvrir et fermer l'ouverture (21), et ainsi également selon un angle oblique relatif au plan d'un siège (16) entourant l'ouverture (21).

3. Vanne de réduction de pression selon la revendication 1 ou 2, **caractérisée en ce que** l'ouverture (21) est maintenue constamment ouverte sans déplacement dans la vanne par une pression entrante dans la vanne qui est inférieure à la pression sortante de consigne.

4. Vanne de réduction de pression selon la revendication 2 ou 3, **caractérisée en ce qu'**une partie du porte-joint (11) est agencée de manière coulissante dans un trou de forme correspondante (19) agencé de manière centrique autour de l'axe de guidage pour un déplacement linéaire du porte-joint (11) dans le trou (19) le long dudit axe de guidage.

5. Vanne de réduction de pression selon la revendication 4, **caractérisée en ce que** le trou (19) est agencé dans une pièce d'extrémité (12) ou dans une partie fixe du logement (1) le long dudit axe de guidage.

6. Vanne de combinaison comprenant une vanne de réduction de pression selon l'une quelconque des revendications précédentes, comprenant un logement (1) de vanne ayant un côté haute-pression (2, 17) et un côté basse-pression (3, 18), lesquels côté haute-pression (2, 17) et côté basse-pression (3, 18) sont séparés par une ouverture (21) qui peut être fermée à l'encontre de la force d'un ressort (5) actionné par la pression dans la vanne, le ressort (5) étant actionné par la pression agissant sur le côté haute-pression (2, 17) de la vanne, et un robinet d'arrêt, **caractérisée en ce que** le robinet d'arrêt a une tige (14), qui est agencée linéairement le long d'un axe ; un ensemble, qui forme la vanne de réduction de pression de la vanne est agencé le long du même axe ; et qu'un trou (19) est agencé au niveau d'une extrémité de la tige (14) de robinet d'arrêt, laquelle tige (14) de robinet d'arrêt, quand le robinet d'arrêt est fermé, est vissée dans une position avant de telle sorte qu'un joint (10) du porte-joint (11) est forcé en contact d'étanchéité contre un siège (16) à l'encontre de la force du ressort (5), pour outrepasser la vanne de réduction de pression, et, quand le robinet d'arrêt est ouvert, est dévissée jusqu'à une position arrière de telle sorte que le porte-joint (11) peut se déplacer avec une course libre le long dudit axe commandé uniquement par l'actionnement du ressort (5).
